# EUROPÄISCHE PATENTANMELDUNG

(11) **EP 1 072 541 A1**
(43) Veröffentlichungstag der Anmeldung: **31.01.2001**
(21) Anmeldenummer: 00114728.9
(22) Anmeldetag: 08.07.2000
(51) Int. Cl.: B65G 53/46

(54) **Zellenradschleuse**

(30) Priorität: 27.07.1999 DE 19934459
(71) Anmelder: Waeschle GmbH, 88250 Weingarten (DE)
(72) Erfinder: Storf, Robert, 88250 Weingarten (DE)
(74) Vertreter: Hemmelmann, Klaus

(57) **Zusammenfassung**

Eine Zellenradschleuse zum Fördern oder Dosieren von Schüttgut umfaßt ein Gehäuse (1) mit einem Einlaufschacht (2) und einem Auslaufschacht (3) sowie ein in einer Gehäusebohrung (4) drehbar angeordnetes, sich radial erstreckende Stege (7) aufweisendes Zellenrad (5), dessen Zellen (8) über vom Umfang des Zellenrads in Richtung des Zellengrunds (13) verlaufende, mit den Zellen (8) über Öffnungen (16) kommunizierende Kanäle (14) mit einem Druckgas bespannbar sind. Die Kanäle (14) sind jeweils vor den ihnen zugeordneten Zellen (8) mit dem Auslaufschacht (3) verbindbar sind, wodurch Druckgas aus dem Auslaufschacht (3) im Bereich des Zellengrunds (13) in die betreffenden Zellen (8) einspeisbar ist. Die Kanäle (14) verlaufen bevorzugt zwischen den Stegen (7) und von den Stegen beabstandeten Trennblechen (12) oder, unter Beibehaltung des gleichen Wirkprinzips, innerhalb der Stege (7).

## Beschreibung

Die Erfindung betrifft eine Zellenradschleuse zum Fördern oder Dosieren von Schüttgut, umfassend ein Gehäuse mit einem Einlaufschacht und einem Auslaufschacht sowie ein in einer Gehäusebohrung drehbar angeordnetes, sich radial erstreckende Stege aufweisendes Zellenrad, dessen Zellen über vom Umfang des Zellenrads in Richtung des Zellengrunds verlaufende, mit den Zellen über Öffnungen (16) kommunizierende Kanäle mit einem Druckgas bespannbar sind.

Eine gattungsgemäße Zellenradschleuse ist aus der Druckschrift DE-AS 2 041 045 bekannt. Das in der Gehäusebohrung drehbar gelagerte, konische Zellenrad bildet eine Vielzahl von Zellen aus, die durch sich radial erstreckende Stege und seitlich angeordnete Bordscheiben begrenzt werden. Bei Drehung des Zellenrads entnehmen die Zellen Schüttgut aus dem Einlaufschacht, das nachfolgend in den Auslaufschacht ausgetragen wird. Da das Zellenrad dichtend in die Gehäusebohrung eingepaßt ist, kann zwischen Einlauf- und Auslaufschacht eine Druckdifferenz herrschen, ohne daß größere Mengen Druckgas durch die Gehäusebohrung dem Druckgefälle folgend von einem Schacht zum anderen entweichen können. Derartige Zellenradschleusen sind daher zum Eintragen von Schüttgut in eine pneumatische Förderleitung geeignet.

Auf der in Drehrichtung gesehen rückwärtigen Seite der Stege sind Kanäle in Form halbkreisförmiger Röhrchen angeordnet, die sich vom Umfang des Zellenrads in Richtung des Zellengrunds erstrecken. Diese Kanäle sind in zwei Stufen mit im Gehäuse angeordneten, paßgenau mit den Kanälen kommunizierenden Druckgasanschlüssen verbindbar, wobei in der ersten Stufe der Druck der mit Schüttgut befüllten Zelle erhöht und in der zweiten Stufe die Zelle durch Fluidstrahlimpulse ausgeblasen wird. Das Druckfluid wird dabei vom Zellengrund her in die gefüllte Zelle eingeblasen, so daß das Schüttgut nicht zum Zellengrund hin verdichtet wird. Auf diese Weise soll eine gründliche und zuverlässige Entleerung der Zellen auch bei der Förderung klebriger oder faseriger Schüttgüter gewährleistet werden.

Diese bekannte Schleuse weist den Nachteil auf, daß für die Zufuhr des Druckmediums gesonderte Druckgasanschlüsse im Gehäuse vorzusehen sind. Ferner ist die axiale Verstellbarkeit des Zellenrads in der Gehäusebohrung begrenzt, da bei Überschreiten einer konstruktiv vorgegebenen Verschiebung kein dichtender Übergang zwischen den Druckgasanschlüssen und den Kanälen gegeben ist. Die Nachrüstung von Zellenradschleusen mit Druckgasanschlüssen ist nur mit einem erheblichen Aufwand möglich. Bei der Förderung kohäsiver Schüttgüter führt das Ausblasen mittels Fluidstrahlen zudem in der Regel nicht zum gewünschten Ergebnis, da diese den Zelleninhalt nur örtlich ausblasen.

Eine weitere gattungsgemäße Zellenradschleuse wird in der Druckschrift US 1,574,168 offenbart. Das Zellenrad weist seitlich eine durch eine Scheibe von den Förderzellen abgetrennte Gruppe von Kammern auf, die gegenüber den Förderkammern um einen Winkel von etwa 30° verdreht angeordnet sind und mit diesen über Öffnungen im Bereich des Zellengrunds kommunizieren können. Bei Drehung des Zellenrads, dessen Achse parallel zur Förderleitung verläuft, werden diese Kammern nacheinander mit einem von der Reinluftleitung abzweigenden Zuluftschacht in Überdeckung gebracht, bevor sich die zugeordnete Förderzelle in den Auslaufschacht entleert. Zuluftschacht und Auslaufschacht sind dabei gemeinsam im Aufgabeschuh der Schleuse angeordnet und durch ein Blech voneinander getrennt. Das über den Zuluftschacht in die zu entleerende Zelle eingespeiste Fördergas unterstützt dabei den Produktaustrag.

Diese Zellenradschleuse erfüllt ihre Aufgabe zwar grundsätzlich, es sind jedoch Beschränkungen bezüglich ihrer Einbaulage vorhanden. Ferner müssen im Aufgabeschuh Einbauten vorgenommen werden. Außerdem ist das Zellenrad in aufwendiger Weise unterteilt, wodurch ein nachträglicher Umbau einer konventionellen Schleuse nur mit großem Aufwand möglich ist.

### Aufgabe

Der Erfindung liegt die Aufgabe zugrunde, eine zuverlässige Entleerung bereits durch alleinige Nutzung eines Überdrucks im Auslaufschacht sicherzustellen, insbesondere bei der Einspeisung kohäsiver Schüttgüter in pneumatische Fördersysteme.

### Lösung

Die Aufgabe wird dadurch gelöst, daß die Kanäle jeweils vor den ihnen zugeordneten Zellen mit dem Auslaufschacht verbindbar sind, wodurch Druckgas aus dem Auslaufschacht im Bereich des Zellengrunds in die betreffenden Zellen einspeisbar ist.

Die Kanäle entnehmen also dem unter erhöhtem Gasdruck stehenden Auslaufschacht eine Menge komprimierten Fördergases, das im Bereich des Zellengrunds in die ihnen zugeordneten, noch nicht mit dem Auslaufschacht überdeckenden Zellen eingespeist wird. Das Schüttgut wird dabei zum Umfang des Zellenrads hin verschoben und auf den im Auslaufschacht herrschenden Druck vorgespannt. Bei der Entleerung hat das Schüttgut daher keine Druckdifferenz zu überwinden.

Eine Zellenradschleuse läßt sich insbesondere nachträglich auf einfache Weise erfindungsgemäß ausstatten, wenn die Kanäle zwischen den Stegen und von den Stegen beabstandeten Trennblechen verlaufen. Die Trennbleche sind dabei bevorzugt abstandsgleich zu den Stegen angeordnet.

Nach einer Ausführung der Erfindung verlaufen die Kanäle auf der in Drehrichtung gesehen rückwärtigen Seite der Stege und kommunizieren durch Öffnungen in den Trennblechen mit den Zellen. Dabei wird vorzugsweise der Übergang zwischen dem Trennblech und der vom Auslaufschacht durchbrochenen Fläche der Gehäusebohrung, beispielsweise der Mantelfläche bei einer Zellenradschleuse mit horizontaler Drehachse und der unteren Stirnfläche bei einer Zellenradschleuse mit vertikaler Drehachse, dichter ausgeführt als der Übergang zwischen dem zugeordneten Steg und der vom Auslaufschacht durchbrochenen Fläche der Gehäusebohrung. Der Kanal wird in diesem Fall durch die vom Auslauf- zum Einlaufschacht aufsteigende Spaltströmung bereits vor der Überdeckung mit dem Auslaufschacht teilweise mit Druckgas gefüllt. Die gewünschten Unterschiede in der Dichtigkeit können beispielsweise durch eine differierende Dicke von Trennblech und Steg oder durch eine unterschiedliche Beabstandung zur Gehäusebohrung herbeigeführt werden.

Alternativ ist es möglich, daß die Kanäle auf der in Drehrichtung gesehen vorderen Seite der Stege verlaufen und durch Öffnungen in den Stegen mit den Zellen kommunizieren. In diesem Fall sind die zuvor beschriebenen Dichtigkeitsverhältnisse umzukehren.

Eine weitere Möglichkeit der Erfindung liegt in der Anordnung der Kanäle in den Stegen, wobei die Kanäle über Öffnungen in den Stegen mit den Zellen kommunizieren.

### Figuren

Die Figuren stellen beispielhaft und schematisch verschiedene Ausführungen der Erfindung dar.

Es zeigen:
- Fig. 1: einen Längsschnitt durch eine erfindungsgemäße Zellenradschleuse nach Anspruch 4
- Fig. 2: eine Aufsicht auf den Flansch des Auslaufschachts der Zellenradschleuse nach Fig. 1
- Fig. 3: eine Vergrößerung des Ausschnitts 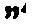 X" aus Fig. 1
- Fig. 4: einen Längsschnitt durch eine weitere erfindungsgemäße Zellenradschleuse
- Fig. 5: eine Aufsicht auf den Flansch des Einlaufschachts der Zellenradschleuse nach Fig. 4
- Fig. 6: eine Aufsicht auf den Flansch des Auslaufschachts der Zellenradschleuse nach Fig. 4
- Fig. 7: eine Seitenansicht bei einem Ausführungsbeispiel mit einem um eine vertikale Achse drehbaren Zellenrad
- Fig. 8: eine Aufsicht auf den Flansch des Auslaufschachts bei der Zellenradschleuse nach Fig. 7
- Fig. 9: einen Längsschnitt durch eine Zellenradschleuse nach Anspruch 8
- Fig. 10: eine Aufsicht auf den Flansch des Auslaufschachts der Zellenradschleuse nach Fig. 9
- Fig. 11: einen Längsschnitt durch eine Zellenradschleuse nach Anspruch 15
- Fig. 12: eine Aufsicht auf den Flansch des Auslaufschachts der Zellenradschleuse nach Fig. 11

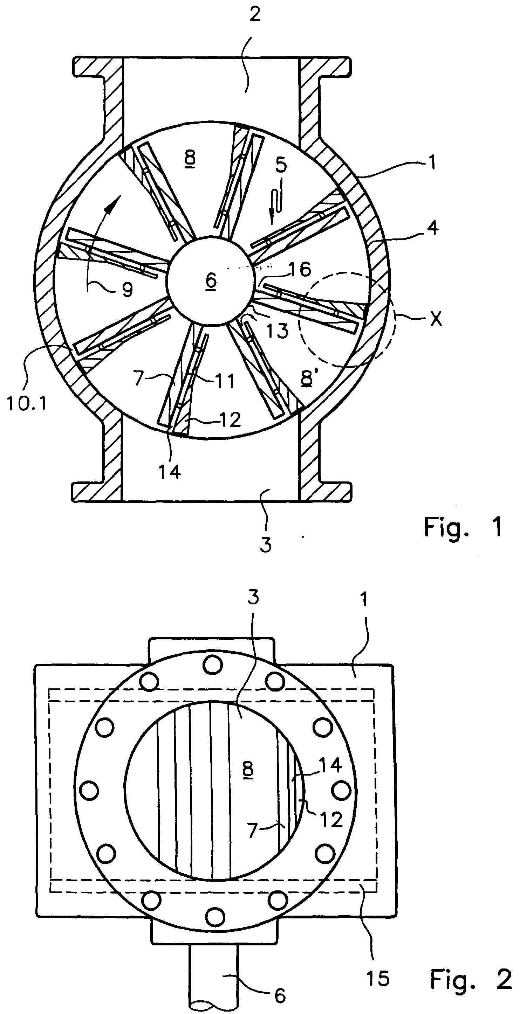

Die in Fig. 1 dargestellt Zellenradschleuse umfaßt ein Gehäuse 1 mit einem Einlaufschacht 2 für die Zufuhr von Schüttgut aus einem nicht abgebildeten Silo und einen kreisrunden Auslaufschacht 3 für den Schüttgutaustrag. Das Gehäuse 1 ist mit einer zylinderförmigen, axial über kreisrunde Stirnflächen und im Umfang durch eine Mantelfläche begrenzte Gehäusebohrung 4 versehen, in der ein Zellenrad 5 über eine Welle 6 drehbar gelagert ist. In diesem Ausführungsbeispiel ist die Welle 6 horizontal ausgerichtet.

Das Zellenrad 5 weist eine Anzahl sich radial von der Welle 6 nach außen erstreckender Stege 7 auf, die eine Vielzahl einzelner Zellen 8 ausbilden. Die jeweils obenliegenden Zellen 8 entnehmen eine Schüttgutmenge aus dem Einlaufschacht 2, die nach einer halben Drehung des Zellenrads 5 in den Auslaufschacht 3 ausgetragen wird. Die Stege 7 sind über relativ enge, dichtende Spalte 10.1 zur Gehäusebohrung 4 beabstandet.

Im Auslaufschacht 3, der in eine nicht dargestellte Förderleitung mündet, herrscht ein höherer Gasdruck als im Einlaufschacht 2. Der Druck in den Zellen 8 steigt zwar durch die Gasströmung entlang der Spalte 10.1 zum Auslaufschacht 3 hin an, das Schüttgut hat beim Austrag in den Auslaufschacht 3 aber ohne zusätzliche Maßnahmen dennoch eine nicht unerhebliche Druckdifferenz zu überwinden, die eine rückstandslose Entleerung der Zellen 8 verhindern kann.

Um diesen Nachteil zu vermeiden, sind auf der in Drehrichtung 9 gesehen rückwärtigen Seite 11 der Stege 7 Trennbleche 12 angeordnet, die vom Umfang des Zellenrads 5 in Richtung des Zellengrunds 13 verlaufende Kanäle 14 ausbilden. Seitlich reichen die Trennbleche bis an die Bordscheiben 15 des Zellenrads 5 heran. Jeder dieser Kanäle 14 kommuniziert mit dem Auslaufschacht 3, bevor die Zelle selbst mit dem Auslaufschacht 3 in direkter Verbindung steht. Diese Stellung des Zellenrads 5 ist in Fig. 2 anschaulich dargestellt. Über den Kanal 14 wird daher eine Menge an Druckgas aus dem Auslaufschacht 3 entnommen und über eine schlitzförmige Öffnung 16 im Bereich des Zellengrunds 13 in die Zelle 8' eingespeist. Das in der Zelle befindliche Schüttgut wird dabei nicht nur auf den Druck im Auslaufschacht 3 vorgespannt, sondern bereits vom Zellengrund 13 her radial nach außen getrieben.

Es ist dabei in der Regel unschädlich, daß beim Befüllen der Zellen 8 über den Einlaufschacht 2 auch eine gewisse Menge an Schüttgut in den Kanal 14 gelangt, da dieses beim Erreichen des Auslaufschacht 3 vom Druckgas in die zugeordnete Zelle 8 gepreßt wird.

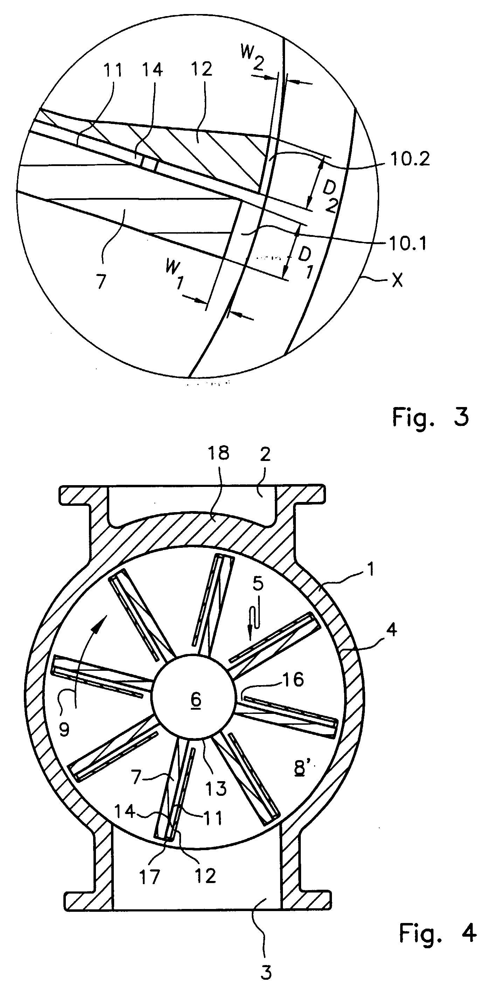

Aus der Darstellung in Fig. 3 geht hervor, daß der Spalt 10.1 (Spaltweite W₁) zwischen dem Steg 7 und der vom Auslaufschacht 3 durchbrochenen Mantelfläche der Gehäusebohrung 4 größer ist als der Spalt 10.2 (Spaltweite W₂) zwischen dem Trennblech 12 und der vom Auslaufschacht 3 durchbrochenen Mantelfläche der Gehäusebohrung 4. Zusätzlich weist das Trennblech 12 im Bereich der vom Auslaufschacht 3 durchbrochenen Mantelfläche eine Dicke D₂ auf, die größer ist als die äußere Dicke D₁ des Stegs 7. Die Dichtigkeit zwischen Steg 7 und Gehäusebohrung 4 ist daher geringer als die Dichtigkeit zwischen dem Trennblech 12 und der Gehäusebohrung 4, so daß bereits vorab eine definierte Menge an Fördergas vom Auslaufschacht 3 zum Kanal 14 strömen kann, ohne direkt durch den Spalt 10.2 in die Zelle 8' zu gelangen.

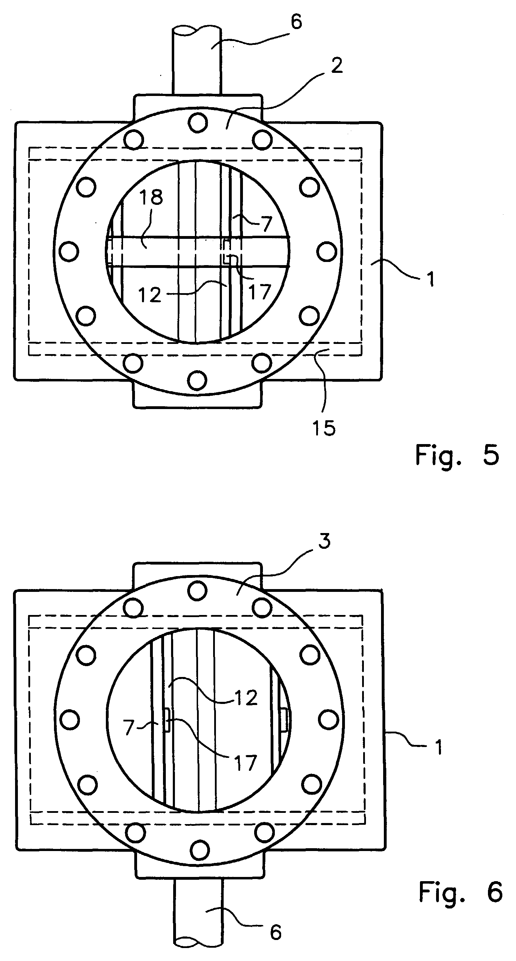

Fig. 4 zeigt eine Zellenradschleuse nach einer weiteren Ausführung der Erfindung, bei welcher der Eintritt von Schüttgut in den Kanal 14 bei Überdeckung mit dem Einlaufschacht 2 vermieden wird. Der Kanal 14 ist in diesem Fall bis auf eine mittig im Trennblech 12 angeordnete Öffnung 17 zum Umfang hin geschlossen. Diese Öffnung wird bei der Befüllung der Zelle 8 mit Schüttgut durch einen dachförmigen Einbau 18 im Einlaufschacht 2 abgedeckt (Fig. 5). Bei Erreichen des Auslaufschachts 3 kommuniziert die Öffnung 17 hingegen in erfindungsgemäßer Weise mit dem Auslaufschacht 3 (Fig. 6).

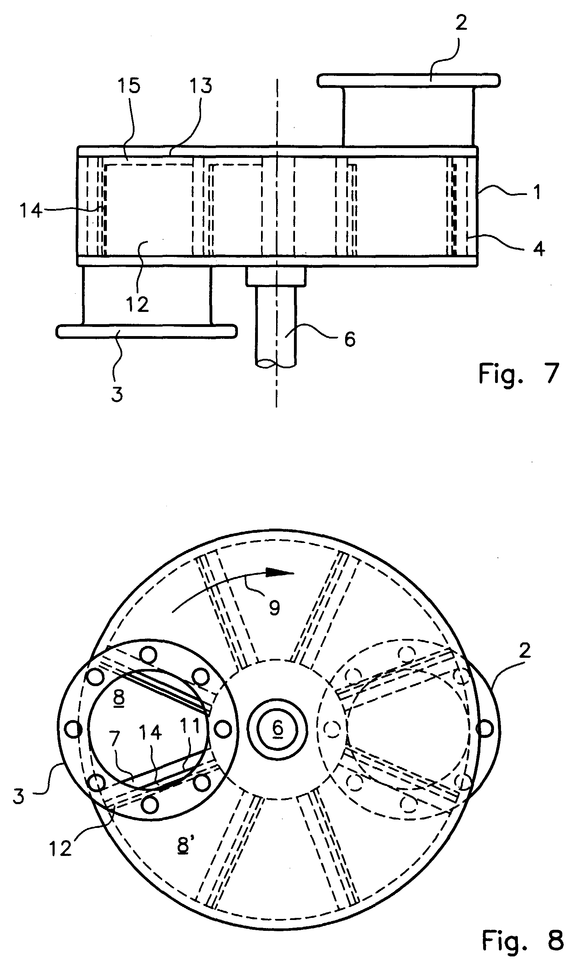

In Fig. 7 ist eine erfindungsgemäße Zellenradschleuse mit einer vertikal ausgerichteten Welle 6 des Zellenrads 5 abgebildet. Die Zellen 8 werden in axialer Richtung von oben über den Einlaufschacht 2 mit Schüttgut befüllt und ebenfalls in axialer Richtung nach unten über den Auslaufschacht 3 entleert. In der Stellung des Zellenrads nach Fig. 8 wird die Zelle 8' über den Kanal 14 erfindungsgemäß mit Druckgas aus dem Auslaufschacht 3 bespannt, während das Trennblech 12 den direkten Eintritt von Druckgas in die Zelle 8' verhindert. Das in der Zelle 8' enthaltende Schüttgut wird durch das Druckgas vom Zellengrund 13 nach unten in Richtung des Auslaufschachts 3 verschoben.

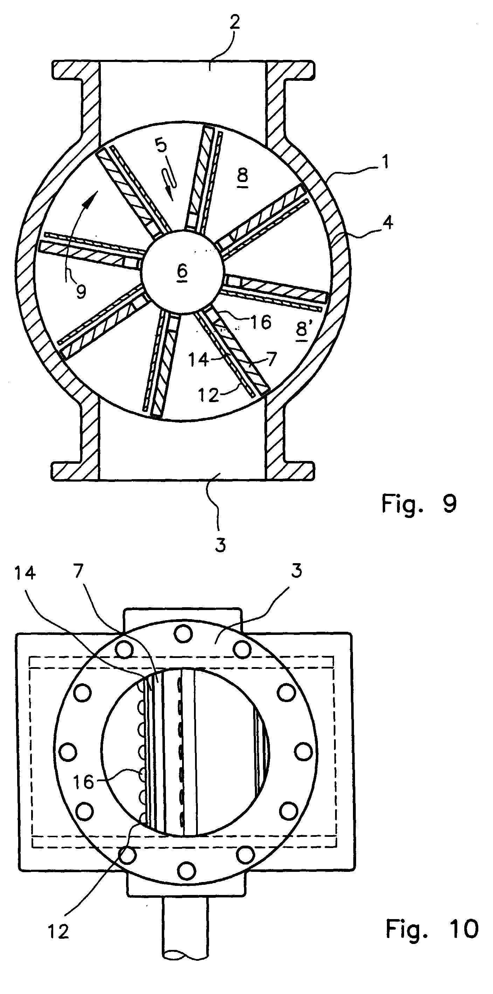

Die in Fig. 9 und 10 dargestellte Zellenradschleuse unterscheidet sich von den zuvor beschriebenen Ausführungsformen dadurch, daß die Trennbleche 12 auf den in Drehrichtung 9 des Zellenrads 5 gesehen vorderen Seiten 19 der Stege 7 angeordnet sind. Das von den Kanälen 14 aus dem Auslaufschacht 3 entnommene Druckgas wird in diesem Fall über beispielsweise kreisrunde Öffnungen 16 in den Stegen 7 in die Zelle 8' eingespeist. Selbstverständlich ist es bei dieser Anordnung von Vorteil, wenn der Steg 7 dichter an der Gehäusebohrung 4 anliegt als das Trennblech 12.

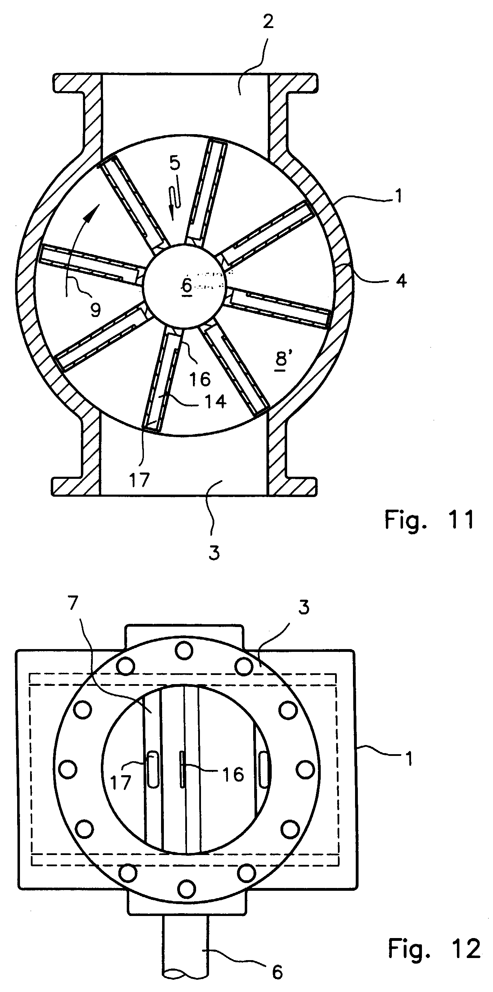

Eine weitere Ausführung der Erfindung zeigen die Figuren 11 und 12. Der Kanal 14 ist bei diesem Ausführungsbeispiel integraler Bestandteil des Stegs 7, so daß auf den Einsatz von Trennblechen verzichtet werden kann. Das Druckgas wird über die Öffnungen 17 und 16 in die Zelle 8' eingespeist. Diese Ausführung ist mit Vorteil auch mit einem dachförmigen Einbau kombinierbar, ähnlich der in Figur 4 dargestellten Zellenradschleuse.

Zellenrad und Gehäusebohrung können auch in anderer als der dargestellten zylinderförmigen Gestalt ausgeführt werden. Es ist ferner möglich, die Stege und/oder Trennbleche zur Gehäusebohrung hin durch an der Gehäusebohrung anliegende Dichtmittel abzudichten.

### Bezugszeichenliste

- 1: Gehäuse
- 2: Einlaufschacht
- 3: Auslaufschacht
- 4: Gehäusebohrung
- 5: Zellenrad
- 6: Welle
- 7: Steg
- 8: Zelle
- 9: Pfeil (Drehrichtung)
- 10: Spalt
- 11: rückwärtige Seite des Stegs
- 12: Trennblech
- 13: Zellengrund
- 14: Kanal
- 15: Bordscheibe
- 16, 17: Öffnung
- 18: dachförmiger Einbau
- 19: vordere Seite des Stegs

## Patentansprüche

1. Zellenradschleuse zum Fördern oder Dosieren von Schüttgut, umfassend ein Gehäuse (1) mit einem Einlaufschacht (2) und einem Auslaufschacht (3) sowie ein in einer Gehäusebohrung (4) drehbar angeordnetes, sich radial erstreckende Stege (7) aufweisendes Zellenrad (5), dessen Zellen (8) über vom Umfang des Zellenrads in Richtung des Zellengrunds (13) verlaufende, mit den Zellen (8) über Öffnungen (16) kommunizierende Kanäle (14) mit einem Druckgas bespannbar sind, dadurch gekennzeichnet, daß die Kanäle (14) jeweils vor den ihnen zugeordneten Zellen (8) mit dem Auslaufschacht (3) verbindbar sind, wodurch Druckgas aus dem Auslaufschacht (3) im Bereich des Zellengrunds (13) in die betreffenden Zellen (8) einspeisbar ist.

2. Zellenradschleuse nach Anspruch 1, dadurch gekennzeichnet, daß die Kanäle (14) zwischen den Stegen (7) und von den Stegen beabstandeten Trennblechen (12) verlaufen.

3. Zellenradschleuse nach Anspruch 2, dadurch gekennzeichnet, daß die Trennbleche (12) im wesentlichen abstandsgleich zu den Stegen (7) verlaufen.

4. Zellenradschleuse nach Anspruch 2 oder 3, dadurch gekennzeichnet, daß die Kanäle (14) entlang der in Drehrichtung (9) gesehen rückwärtigen Seite (11) der Stege verlaufen.

5. Zellenradschleuse nach Anspruch 4, dadurch gekennzeichnet, daß der Übergang zwischen Trennblech (12) und der vom Auslaufschacht (3) durchbrochenen Fläche der Gehäusebohrung (4) dichter ausgeführt ist als der Übergang zwischen dem zugeordneten Steg (7) und der vom Auslaufschacht (3) durchbrochenen Fläche der Gehäusebohrung (4).

6. Zellenradschleuse nach Anspruch 5, dadurch gekennzeichnet, daß das Trennblech (12) im Bereich der vom Auslaufschacht (3) durchbrochenen Fläche der Gehäusebohrung (4) eine größere Dicke aufweist als der zugeordnete Steg (7).

7. Zellenradschleuse nach Anspruch 5 oder 6, dadurch gekennzeichnet, daß das Trennblech (12) zur vom Auslaufschacht (3) durchbrochenen Fläche der Gehäusebohrung (4) geringer beabstandet ist als der zugeordnete Steg (7).

8. Zellenradschleuse nach Anspruch 2 oder 3, dadurch gekennzeichnet, daß die Kanäle (14) entlang der in Drehrichtung (9) gesehen vorderen Seite (19) der Stege (7) verlaufen.

9. Zellenradschleuse nach Anspruch 8, dadurch gekennzeichnet, daß der Übergang zwischen Trennblech (12) und der vom Auslaufschacht (3) durchbrochenen Fläche der Gehäusebohrung (4) weniger dicht ausgeführt ist als der Übergang zwischen dem zugeordneten Steg (7) und der vom Auslaufschacht (3) durchbrochenen Fläche der Gehäusebohrung (4).

10. Zellenradschleuse nach Anspruch 9, dadurch gekennzeichnet, daß das Trennblech (12) im Bereich der vom Auslaufschacht (3) durchbrochenen Fläche der Gehäusebohrung (4) eine geringere Dicke aufweist als der zugeordnete Steg (7).

11. Zellenradschleuse nach Anspruch 9 oder 10, dadurch gekennzeichnet, daß das Trennblech (12) zur vom Auslaufschacht (3) durchbrochenen Fläche der Gehäusebohrung (4) größer beabstandet ist als der zugeordnete Steg (7).

12. Zellenradschleuse nach einem der Ansprüche 2 bis 11, dadurch gekennzeichnet, daß die Welle (6) des Zellenrads (5) im wesentlichen horizontal ausgerichtet ist, wobei sich die Trennbleche (12) über die gesamte axiale Breite der Stege (7) erstrecken.

13. Zellenradschleuse nach Anspruch 12, dadurch gekennzeichnet, daß die Kanäle (14) seitlich von Bordscheiben (15) des Zellenrads (5) begrenzt werden.

14. Zellenradschleuse nach einem der Ansprüche 2 bis 11, dadurch gekennzeichnet, daß die Welle (6) des Zellenrads (5) im wesentlichen vertikal ausgerichtet ist, wobei sich die Trennbleche (12) über die gesamte radiale Breite der Stege (7) erstrecken.

15. Zellenradschleuse nach Anspruch 1, dadurch gekennzeichnet, daß die Kanäle (14) innerhalb der Stege (7) verlaufen.
